# EUROPEAN PATENT APPLICATION

(11) **EP 3 766 382 A1**
(43) Date of publication of application: **20.01.2021**
(21) Application number: 18910000.1
(22) Date of filing: 22.06.2018
(51) Int. Cl.: A47B 47/00

(54) **CHARGING UNIT, AND BATTERY SWAPPING STATION**

(30) Priority: 13.03.2018 CN 201820340135 U
(71) Applicant: NIO (ANHUI) HOLDING CO., LTD, Economic and Technological Development Zone Hefei Anhui 230601 (CN)
(72) Inventor: HAO, Zhanduo, Hong Kong (CN)
(74) Representative: Vossius & Partner Patentanwälte Rechtsanwälte mbB
(86) International application number: PCT/CN2018/092303
(87) International publication number: WO 2019/174147

(57) **Abstract**

Disclosed is a charging unit. The charging unit comprises: a frame (1) for storing a battery; a conveying mechanism (2), the conveying mechanism (2) being driven by an external force to convey the battery into or out of the frame (1); a charging and connecting device (3), the charging and connecting device (3) being provided on the frame (1), and the battery being fixed relative to the frame (1) by means of the charging and connecting device (3); and a first expansion member (106), the first expansion member (106) being provided on the frame (1) and having a first connection part (161) and a second connection part (162) in a first direction, wherein the first connection part (161) has a first structure, and the second connection part (162) has a second structure, the first structure being configured to have a structure that matches the second structure. Further disclosed is a battery swap station comprising the charging unit. The charging unit is suitable for large-scale production, has low costs and is easy to popularize.

## Description

### Technical Field

This application belongs to the field of charging services, and in particular to a charging unit and a battery swap station.

### Background Art

Battery swap is currently the fastest way to replenish electric vehicles with power, and the best battery swap mode for passenger vehicles is chassis-type swap. In order to ensure the trafficability of vehicles, traction batteries for chassis-type swap are generally low in height and have large projection areas. Charging units in the battery swap station are mostly arranged in multiple layers to reduce the footprint.

When the charging units in the battery swap station are arranged in multiple layers, due to the large size, heavy weight and large height thereof, and since there are many structural components and electrical components inside the charging units, they can only be installed, assembled and transported as a whole. This is inconvenient in actual production, and there is a greater security risk. The battery swap station has no online expansion function, which affects the production and construction efficiency thereof.

### Summary of the Invention

One aspect of this application is to provide a charging unit, comprising:
a frame for storing a battery;
a conveying mechanism, the conveying mechanism being driven by an external force to convey the battery into or out of the frame;
a charging and connecting device, the charging and connecting device being provided on the frame, and the battery being fixed relative to the frame by means of the charging and connecting device; and
a first expansion member, the first expansion member being provided on the frame and having a first connection part and a second connection part in a first direction, wherein the first connection part has a first structure, and the second connection part has a second structure, the first structure being configured to have a structure that matches the second structure.

The charging unit described above further comprises a second expansion member, wherein the second expansion member has a first attachment end and a second attachment end in a second direction, which is perpendicular to the first direction, and one of the first attachment end and the second attachment end is attached to the frame.

In the charging unit described above, the first connection part is an inner tube, the second connection part is an outer tube, and the dimensions of the outer tube and the inner tube are designed to form a nested connection between the outer tube and the inner tube.

In the charging unit described above, the first connection part and the second connection part are respectively further provided with a guide part, wherein the guide parts are used to guide one of the first connection part and the second connection part to move in the first direction relative to the other thereof to be connected.

The charging unit described above further comprises a limiting mechanism, wherein the frame has a battery charging position, and the limiting mechanism senses whether the battery reaches the battery charging position.

In the charging unit described above, the conveying mechanism is rollers arranged on the frame.

In the charging unit described above, the frame is further provided with a guide device for guiding the conveying of the battery relative to the frame.

Another aspect of this application is to provide a battery swap station, comprising at least two charging units having the same structure according to any one described above, which are arranged in a first direction, wherein a first connection part of a first expansion member of a first charging unit is connected to a second connection part of a first expansion member of a second charging unit.

The battery swap station described above further comprises a third charging unit, wherein the third charging unit and the first charging unit arranged in a second direction, which is perpendicular to the first direction; the first charging unit has a second expansion member; the second expansion member has a first attachment end and a second attachment end in the second direction; and the first attachment end is attached to a frame of the first charging unit, and the second attachment end is attached to a frame of the second charging unit.

In the battery swap station described above, the first connection part is an inner tube, the second connection part is an outer tube, the first connection part of the first charging unit and the second connection part of the second charging unit are connected in a nested manner, and the first connection part and the second connection part are fastened to each other by providing a fixing member at overlapping parts thereof.

The first direction is a vertical direction, and the second direction is a horizontal direction.

The charging unit of this application has an expansion function. Through their respective expansion members, multiple charging units can be assembled into a multi-layer and/or multi-row battery swap station. The conveying mechanism is composed of unpowered rollers. The battery can be conveyed into or pulled out of the frame by an external transportation apparatus or manpower. The rollers are arranged higher than the frame to reduce the friction between the battery and the frame when the battery is conveyed into or pulled out of the frame. The guide parts on the expansion members can facilitate the rapid positioning and assembly of the charging units. The assembled battery swap station is assembled into a whole by using fasteners, thereby improving the anti-vibration performance. This application has a high degree of standardization, can be mass-produced, meets daily transportation requirements, has low costs and is easy to popularize.

Other aspects and features of the application will become apparent from the following detailed description with reference to accompanying drawings. However, it should be understood that the accompanying drawings are designed for the purpose of explanation only and are not intended to limit the scope of the application, as they should refer to the appended claims. It should also be understood that the accompanying drawings are only intended to conceptually illustrate the structures and processes described herein and are not necessarily drawn to scale unless otherwise indicated.

### Brief Description of the Drawings

The application will be more fully understood by referring to the following detailed description of specific embodiments in conjunction with the accompanying drawings, in which like reference numerals refer to like elements throughout the figures, in which:
Fig. 1 shows a structural schematic diagram of an embodiment of a charging unit of this application;
Fig. 2 is a structural schematic diagram of an embodiment of a battery swap station of this application;
Figs. 3-5 are schematic diagrams of the matching processes between first expansion members of a charging unit and another charging unit mounted thereon in a vertical direction according to the present application, wherein Fig. 3 shows the state before the assembling, Fig. 4 is the state during the assembling, and Fig. 5 shows the state after the assembling;
Fig. 6 is a structural schematic diagram of an embodiment of the first expansion member of the charging unit according to this application; and Fig. 7 is a structural schematic diagram of another embodiment of the first expansion member of the charging unit according to this application.

### Detailed Description of Embodiments

In order to help those skilled in the art to accurately understand the claimed subject matter of the application, the specific embodiments of the application will be described in detail below with reference to the accompanying drawings.

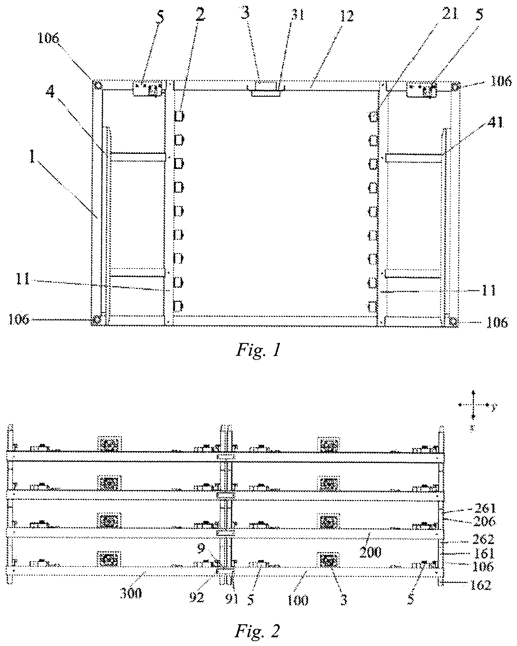

Fig. 1 shows a structural schematic diagram of a charging unit of this application. As shown, the charging unit comprises a frame 1, a conveying mechanism 2, and a charging and connecting device 3. The frame 1 is used for receiving and storing a battery, and is composed of a number of cross beams 12 and a number of side beams 11 connecting the cross beams. The conveying mechanism 2 is driven by an external force to convey the battery into or out of the frame 1, and the external force may be a push/pull force generated by other apparatuses such as a transportation apparatus or manpower. The conveying mechanism 2 is provided on the frame 1. In the illustrated embodiment, the centre of the frame 1 is provided with two opposite side beams 11. Each of the side beams 11 is provided with a row of unpowered rollers 21, and the top of the row of rollers defines a convey surface, and the battery can enter or be pulled out of the frame 1 via the row of rollers under the action of the external force. During the moving process of entering or pulling out, the battery is in line contact with each roller 21, and the roller 21 may be arranged such that the top thereof is higher than the frame, which can reduce the friction between the battery and the frame 11 during movement. The charging and connecting device 3 is provided on the frame 1 and has the functions of fixing the battery relative to the frame 1 and charging the battery. The position of the charging and connecting device 3 on the frame 1 is related to a charging port of the battery, and the charging and connecting device 3 is provided with an engaging part 31 connected to the charging port of the battery. In the illustrated embodiment, the charging and connecting device 3 is arranged inside the cross beam 12 and engages side-by-side with the battery. Of course, the charging and connecting device 3 may also be arranged in another position of the frame 1, such as but not limited to the position where it engages with the battery one above the other. The frame 1 is further provided with a guide device 4. The guide device 4 is a pair of guide bars 41 arranged near two sides of the row of rollers, and the distance between the guide bars 41 is set to correspond to the size of the battery. Since the battery is relatively large, during the moving process of conveying the battery into or out of the frame 1, if the rollers move inconsistently or the push/pull force applied to the battery is not uniform, the conveying route of the battery will deviate. The guide bars 41 can provide restraint for the battery during conveying, such that the battery moves on the right conveying route.

The frame 1 has a battery charging position. The battery is fixed to the frame 1 via the charging and connecting device 3 when being conveyed to the battery charging position. The charging unit further comprises a limiting mechanism 5. The limiting mechanism 5 is used to sense whether the battery reaches the battery charging position. The limiting mechanism 5 makes a response when sensing that the battery reaches the battery charging position, to stop the transportation apparatus, such that the battery stops moving forward. The limiting mechanism 5 may be a sensor, a travel switch, a microswitch, etc. In the illustrated embodiment, there are two limiting mechanisms 5, which are separately arranged on two sides of the frame 1. The number and position of the limiting mechanism 5 may be designed based on the size of the battery. When the battery is relatively large, at least two limiting mechanisms 5 must be used to ensure that whether the battery reaches the battery charging position is correctly sensed.

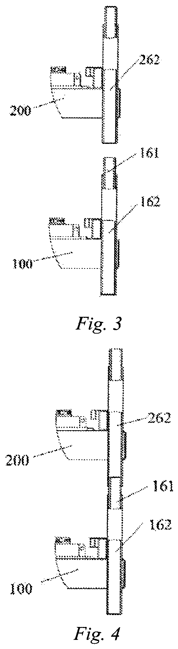

Fig. 2 is a structural schematic diagram of a battery swap station of this application. As shown, the battery swap station is formed by assembling a plurality of charging units described above, and these charging units may be assembled either in a vertical direction x or in a horizontal direction y. First, the structure of the charging units assembled in the vertical direction is introduced. Two adjacent charging units one above the other are taken as an example. The lower charging unit is used as a first charging unit 100, and the upper charging unit is used as a second charging unit 200. The first charging unit 100 has a first expansion member 106, and the second charging unit 200 has the same first expansion member 206. The first expansion member 106 of the first charging unit 100 is connected to the first expansion member 206 of the second charging unit 200 such that the second charging unit 200 is assembled on the first charging unit 100. Each of the first expansion members 106 has an upper first connection part 161, 261 and a lower second connection part 162, 262 in the vertical direction x. The first connection part 161, 261 has a first structure, and the second connection part 162, 262 has a second structure. The first structure is configured to have a structure that matches the second structure, such that when the second charging unit 200 is assembled to the first charging unit 100, the second connection part 262 of the first expansion member 206 of the second charging unit 200 matches the first connection part 161 of the first expansion member 106 of the first charging unit 100. In the illustrated embodiment, with reference to Figs. 3-5, the first connection part 161 is an inner tube, and the second connection part 262 is an outer tube. The dimensions of the inner tube and the outer tube are designed to form a nested connection between the inner tube and the outer tube, that is, the outer tube can be fitted over the inner tube. The inner tube and the outer tube of the first expansion member are connected by welding, thereby forming the first expansion member. During assembly, the second connection part 262 (outer tube) of the second charging unit is aligned with the first connection part 161 (inner tube) of the first charging unit, and the second connection part 262 is fitter over the first connection part 161, and moves along the first connection part 161 until the second connection part 262 abuts against the other second connection part 162 (the second connection part of the first charging unit). The cross section of the tube (whether the inner tube or the outer tube) may have round, square, rectangular, polygonal, or other regular or irregular shapes, as long as the inner tube and the outer tube can match each other. It is also possible that the outer tube is arranged above the first expansion member, and the inner tube is arranged below the first expansion member.

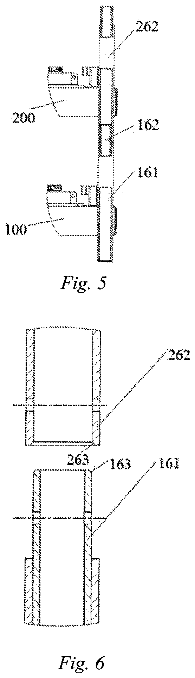

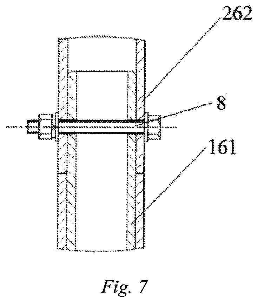

In the illustrated embodiment, the first connection part 161 and the second connection part 262 are each further provided with a guide part 163, 263 that guides one of the first connection part 161 and the second connection part 262 to move in the vertical direction relative to the other. Referring to Fig. 6, the outer diameter of the first connection part 161 (inner tube) is chamfered, and the inner diameter of the second connection part 262 (outer tube) is chamfered. Therefore, during assembling, the provision of the chamfers facilitates the insertion of the first connection part 161 into the second connection part 262. Referring to Fig. 7, when assembled in place, a fastener 8, such as a bolt shown in the figure, is used to pass through overlapping parts of the first connection part 161 and the second connection part 262 and fix them, such that the first connection part 161 and the second connection part 262 are fastened to each other.

Referring back to Figs. 1 and 2, for each charging unit, there are four first expansion members 106, which are arranged on four corners of the frame. The second charging unit with first expansion members on the four corners is assembled on the first expansion members on the four corners of the first charging unit. In this way, a two-layer structure is formed. By analogy, another charging unit with the same structure can also be received above the second charging unit. Therefore, the battery swap station can contain several layers of charging units.

Next, the structure of the charging units assembled in the horizontal direction is introduced. The charging units adjacent to each other in the left-right direction are taken as an example. The right-hand charging unit is used as the first charging unit 100 described above, and the left-hand charging unit is used as a third charging unit 300. The first charging unit 100 has a second expansion member 9. The second expansion member 9 has a first attachment end 91 and a second attachment end 92 in the horizontal direction, wherein the first attachment end 91 is attached to the frame of the first charging unit 100, and the second attachment end 92 is attached to the frame of the third charging unit 300, such that the first charging unit 100 and the third charging unit 300 are arranged together side by side. On this basis, the second charging unit 200 described above can be then assembled above the first charging unit 100, and another charging unit with the same structure can be assembled above the third charging unit 300. In the illustrated embodiment, the second expansion member 9 is a bridging plate. There may be an even number of bridging plates, which are arranged on the front and back sides of the charging unit (the bridging plate on the front side is shown in Fig. 2). In this way, the battery swap station can be provided with multiple rows of charging units in the horizontal direction.

The battery swap station is formed by assembling multiple charging units with the same structure, so it can be mass-produced, and the problems of difficult installation and transportation are solved, so that the production and construction cycle of the battery swap station is shortened. In addition, the constructed battery swap station can also be expanded online according to requirements to provide fast and reliable support for charging services.

Although specific embodiments of the application have been shown and described in detail to illustrate the principles of the application, it should be understood that the application may be implemented in other ways without departing from such principles.

## Claims

1. A charging unit, **characterized by** comprising:
a frame (1) for storing a battery;
a conveying mechanism (2), the conveying mechanism (2) being driven by an external force to convey the battery into or out of the frame (1); a charging and connecting device (3), the charging and connecting device (3) being provided on the frame (1), and the battery being fixed relative to the frame (1) by means of the charging and connecting device (3); and
a first expansion member (106), the first expansion member (106) being provided on the frame (1) and having a first connection part (161) and a second connection part (162) in a first direction, wherein the first connection part (161) has a first structure, and the second connection part (162) has a second structure, the first structure being configured to have a structure that matches the second structure.

2. The charging unit according to claim 1, **characterized by** further comprising a second expansion member (9), wherein the second expansion member (9) has a first attachment end (91) and a second attachment end (92) in a second direction, which is perpendicular to the first direction, and one of the first attachment end (91) and the second attachment end (92) is attached to the frame (1).

3. The charging unit according to claim 1 or 2, **characterized in that** The first connection part (161) is an inner tube, the second connection part (162) is an outer tube, and the dimensions of the outer tube and the inner tube are designed to form a nested connection between the outer tube and the inner tube.

4. The charging unit according to claim 1 or 2, **characterized in that** the first connection part and the second connection part are respectively further provided with a guide part (163, 263), wherein the guide parts (163, 263) are used to guide one of the first connection part and the second connection part to move in the first direction relative to the other thereof to be connected.

5. The charging unit according to claim 1 or 2, **characterized by** further comprising a limiting mechanism (5), wherein the frame (1) has a battery charging position, and the limiting mechanism (5) senses whether the battery reaches the battery charging position.

6. The charging unit according to claim 1 or 2, **characterized in that** the conveying mechanism (2) is rollers (21) arranged on the frame.

7. The charging unit according to claim 1 or 2, **characterized in that** the frame (1) is further provided with a guide device (4) for guiding the conveying of the battery relative to the frame (1).

8. A battery swap station, **characterized by** comprising at least two charging units according to any one of claims 1-7, which are arranged in a first direction, wherein a first connection part (161) of a first expansion member (106) of a first charging unit (100) is connected to a second connection part (262) of a first expansion member (206) of a second charging unit (200).

9. The battery swap station according to claim 8, **characterized by** further comprising a third charging unit (300), wherein the third charging unit (300) and the first charging unit (100) arranged in a second direction, which is perpendicular to the first direction; the first charging unit (100) has a second expansion member (9); the second expansion member (9) has a first attachment end (91) and a second attachment end in the second direction (92); and the first attachment end (91) is attached to a frame of the first charging unit (100), and the second attachment end (92) is attached to a frame of the second charging unit (200).

10. The battery swap station according to claim 8 or 9, **characterized in that** the first connection part (161) is an inner tube, the second connection part (262) is an outer tube, the first connection part (161) of the first charging unit and the second connection part (262) of the second charging unit are connected in a nested manner, and the first connection part (161) and the second connection part (262) are fastened to each other by providing a fixing member (8) at overlapping parts thereof.

11. The battery swap station according to claim 8 or 9, **characterized in that** the first direction is a vertical direction (x), and the second direction is a horizontal direction (y).
